# EUROPÄISCHE PATENTSCHRIFT

(11) **EP 2 562 041 B1**
(45) Veröffentlichungstag und Bekanntmachung des Hinweises auf die Patenterteilung: **19.02.2020**
(21) Anmeldenummer: 12175125.9
(22) Anmeldetag: 05.07.2012
(51) Int. Cl.: B60Q 1/14

(54) **Verfahren und Vorrichtung zur Steuerung einer Lichtaussendung eines Scheinwerfers eines Fahrzeugs**
Method and device for controlling a light emission from a headlamp of a vehicle
Procédé et dispositif de commande de l'émission lumineuse d'un phare de véhicule

(30) Priorität: 23.08.2011 DE 102011081371
(43) Veröffentlichungstag der Anmeldung: 27.02.2013
(73) Patentinhaber: ROBERT BOSCH GMBH, 70442 Stuttgart (DE)
(72) Erfinder: Ehlgen, Tobias, 88212 Ravensburg (DE); Foltin, Johannes, 71254 Ditzingen (DE); Meisner, Robert, 70806 Kornwestheim (DE)

(56) Entgegenhaltungen:
- EP-A1- 2 266 836
- WO-A1-2005/075246
- DE-A1- 3 436 391
- DE-A1-102006 045 525
- DE-A1-102009 024 129
- DE-T2- 60 313 072
- FR-A1- 2 386 431
- US-A1- 2004 052 083

## Beschreibung

### Stand der Technik

Die vorliegende Erfindung bezieht sich auf ein Verfahren zur Steuerung einer Lichtaussendung eines Scheinwerfers eines Fahrzeugs sowie auf eine Vorrichtung, die ausgebildet ist, um die Schritte eines solchen Verfahrens durchzuführen.

Bei einer Lichtsteuerung in einem Fahrzeug mittels eines bekannten Fernlichtassistenten werden Entprellzeiten bzw. Entprellstrecken eingesetzt, um beispielsweise ein Aufblenden zu verzögern. Hierbei ist allgemein bei einem Fernlichtassistenten eine gewisse Entprellzeit bzw. Entprellstrecke vorgesehen, damit ein plötzlich (wieder) auftauchendes Fahrzeug, das z. B. kurz hinter einer Kurve oder Kuppe verschwindet, nicht geblendet wird. Die Entprellung wird im Allgemeinen bei allen Fernlichtassistenten benötigt. Bei Nacht wird in der Regel kein Fernlicht eingesetzt, wenn sich andere Verkehrsteilnehmer im blendungsrelevanten Verkehrsraum befinden. Erst wenn kein Fahrzeug mehr im blendungsrelevanten Verkehrsraum vor dem Fahrzeug ist, z. B. ein entgegenkommendes Fahrzeug vorbeigefahren ist oder ein vorausfahrendes Fahrzeug hinter einer Kurve verschwunden ist, kann auf Fernlicht umgeschaltet werden.

Die EP 2 119 592 A1 offenbart ein Steuergerät zur Steuerung der Lichtverteilung von Hauptscheinwerfern eines Kraftfahrzeugs. Die DE 10 2009 024 129 A1 betrifft ein Verfahren zur Fahrlichtsteuerung eines Fahrzeugs mit zumindest einem schwenkbaren Scheinwerfer, bei dem als Lichtverteilungen eine Abblendlichtverteilung, eine Teilfernlichtverteilung und/oder eine Fernlichtverteilung eingestellt werden. In der DE 10 2006 045 525 A1 ist ein Kraftfahrzeugscheinwerfer gezeigt, wobei der Scheinwerfer ein Steuergerät zum Steuern eines Umschaltvorgangs zwischen Abblendlicht und Fernlicht aufweist, wobei das Steuergerät den Umschaltvorgang derart steuert, dass ein Anheben bzw. Absenken einer Helldunkelgrenze im Wesentlichen kontinuierlich erfolgt und der Umschaltvorgang verlängert ist.

### Offenbarung der Erfindung

Vor diesem Hintergrund werden mit der vorliegenden Erfindung ein Verfahren zur Steuerung einer Lichtaussendung eines Scheinwerfers eines Fahrzeugs, eine entsprechende Vorrichtung sowie ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass während eines Entprellfensters, das beispielsweise durch eine Entprellzeit oder eine Entprellstrecke definiert ist, bei einer Veränderung einer Lichtaussendung eines Fahrzeugscheinwerfers, beispielsweise im Rahmen eines Aufblendvorgangs von Abblendlicht zu Fernlicht, eine Umstellung der Abstrahlcharakteristiken über eine oder mehrere Zwischenstufen erfolgen kann. Somit erfolgt keine direkte, abrupte Umschaltung zwischen einer Eingangsabstrahlcharakteristik, die beispielsweise Abblendlicht entsprechen kann, zu einer Ausgangsabstrahlcharakteristik, die beispielsweise Fernlicht entsprechen kann. Stattdessen erfolgt eine abgestufte Änderung der Eingangsabstrahlcharakteristik zu der Ausgangsabstrahlcharakteristik bzw. erfolgt eine letzte Stufe der Umstellung auf die Ausgangsabstrahlcharakteristik ausgehend von einer Zwischenabstrahlcharakteristik.

Ein Vorteil der vorliegenden Erfindung liegt darin, dass für die Entprellzeit oder die Entprellstrecke ein vorteilhafter Kompromiss zwischen Sichtweite und prophylaktischer Blendungsvermeidung gefunden ist. Zu häufiges Auf- und Abblenden und eine damit verbundene störende Auswirkung auf Fahrkomfort und Sehvermögen können verhindert werden. Während der Entprellzeit oder der Entprellstrecke, bei der es sich um ein prophylaktisches Warten zwischen Auf- und Abblenden handelt, hat der Fahrer durch die Zwischenstufe eine verbesserte Sichtweite und eine potentielle Blendung anderer Verkehrsteilnehmer wird vermieden. Es kann ebenso ein unkomfortables Abblenden, wenn aufgeblendet wurde und kurz danach ein Fahrzeug auftaucht, vermieden werden. Somit können die Sichtweite sowie die Sicherheit während der Entprellzeit oder Entprellstrecke erhöht werden, wobei die Wahrscheinlichkeit einer Blendung eines potentiell auftauchenden Fahrzeugs gering gehalten werden kann. Die Ansteuerung erfolgt beispielsweise so, dass es für den Fahrer komfortabel ist. Es sind im Schnitt weniger häufig ein schnelles Umschalten sowie Auf- und Abblenden nötig, die vom Fahrer leicht wahrgenommen werden können und als negativ empfunden werden, insbesondere beim Abblenden bzw. Reduzieren der Sichtweite. Es wird beispielsweise zwischen "abgeblendet bleiben" und "aufblenden" eine Zwischenstufe des Scheinwerfers eingestellt. Dadurch erhält der Fahrer eine weitere Sicht. Auftauchender Verkehr wird aber nicht geblendet, da die Zwischenstufe beispielsweise so gewählt ist oder wird, dass eine Hell-Dunkel-Grenze maximal bis auf Scheinwerferhöhe reicht. Falls beispielsweise andere Verkehrsteilnehmer während der restlicher Entprellzeit auftauchen, muss daher auch nicht bzw. nur minimal abgeblendet werden, was für den Fahrer eine verminderte Störung z. B. aufgrund einer Lichtmengenänderung im Verkehrsraum bedeutet.

Die vorliegende Erfindung schafft ein Verfahren zur Steuerung einer Lichtaussendung zumindest eines Scheinwerfers eines Fahrzeugs, wobei das Verfahren, unter anderem, folgende Schritte aufweist:
Empfangen eines Veränderungsfreigabesignals zur Durchführung einer Veränderung der Lichtaussendung des zumindest einen Scheinwerfers von einer Eingangsabstrahlcharakteristik zu einer Ausgangsabstrahlcharakteristik während einer ansprechend auf das Veränderungsfreigabesignal beginnenden Entprellzeit und/oder Entprellstrecke;
Verändern der Lichtaussendung des zumindest einen Scheinwerfers von der Eingangsabstrahlcharakteristik zu einer Zwischenabstrahlcharakteristik ansprechend auf das Veränderungsfreigabesignal; und
Verändern der Lichtaussendung des zumindest einen Scheinwerfers von der Zwischenabstrahlcharakteristik zu der Ausgangsabstrahlcharakteristik nach Ablauf der Entprellzeit und/oder der Entprellstrecke.

Bei dem Fahrzeug kann es sich um ein Kraftfahrzeug handeln, insbesondere ein straßengebundenes Kraftfahrzeug, beispielsweise einen Personenkraftwagen, Lastkraftwagen, in Fahrzeug zum Personentransport oder ein sonstiges Nutzfahrzeug. Bei dem zumindest einen Scheinwerfer kann es sich beispielsweise um einen Frontscheinwerfer des Fahrzeugs handeln. Die Lichtaussendung des Scheinwerfers kann hierbei in Stufen veränderbar sein. Die Lichtaussendung des Scheinwerfers kann dabei hinsichtlich der Abstrahlcharakteristik des Scheinwerfers verändert werden. Die Eingangsabstrahlcharakteristik, die Zwischenabstrahlcharakteristik und die Ausgangsabstrahlcharakteristik können jeweils einen Leuchtwinkel, eine Lichtverteilung, eine Helligkeit, eine Lichtmenge, eine Beleuchtungsintensität, eine Leuchtweite und/oder dergleichen des zumindest einen Scheinwerfers repräsentieren. Dabei können sich die Eingangsabstrahlcharakteristik, die Zwischenabstrahlcharakteristik und die Ausgangsabstrahlcharakteristik jeweils zumindest hinsichtlich einer der genannten Parameter des Scheinwerfers unterscheiden. Dabei liegen entsprechende Werte von Leuchtwinkel, Lichtverteilung, Helligkeit, Lichtmenge, Beleuchtungsintensität, Leuchtweite und/oder dergleichen der Zwischenabstrahlcharakteristik zwischen entsprechenden Werten der Eingangsabstrahlcharakteristik und der Ausgangsabstrahlcharakteristik. Beispielsweise kann die Eingangsabstrahlcharakteristik einem niedrigeren Leuchtwinkel bzw. einer geringeren Leuchtweite des Scheinwerfers als die Ausgangsabstrahlcharakteristik entsprechen oder umgekehrt. Beispielsweise kann die Eingangsabstrahlcharakteristik einem Abblendlicht entsprechen oder ähnlich einem Abblendlicht sein und kann die Ausgangsabstrahlcharakteristik einem Fernlicht entsprechen oder ähnlich einem Fernlicht sein oder umgekehrt. Die Entprellzeit stellt eine Form von Hysterese dar. Die Entprellzeit kann hierbei zum Beispiel als eine Verzögerungszeit bei der Veränderung der Lichtaussendung des Scheinwerfers zwischen der Eingangsabstrahlcharakteristik und der Ausgangsabstrahlcharakteristik verstanden werden. Die Entprellzeit kann direkt bei Empfang des Veränderungsfreigabesignals gestartet werden. Mit dem Verändern der Lichtaussendung von der Eingangsabstrahlcharakteristik zu der Zwischenabstrahlcharakteristik kann ebenfalls direkt bei Empfang des Veränderungsfreigabesignals begonnen werden. Mit dem Verändern der Lichtaussendung von der Zwischenabstrahlcharakteristik zu der Ausgangsabstrahlcharakteristik kann direkt nach Ablauf der Entprellzeit begonnen werden. Eine Dauer der Entprellzeit kann fest vorgegeben oder einstellbar sein. Alternativ zu der Entprellzeit kann die Entprellstrecke eingesetzt werden. Die Entprellstrecke kann sich auf eine von dem Fahrzeug zurückgelegte Fahrstrecke beziehen. Unter Kenntnis der Geschwindigkeit des Fahrzeugs kann aus der Entprellzeit die Entprellstrecke, und umgekehrt, ermittelt werden.

In zumindest einem der Schritte des Veränderns kann die Lichtaussendung graduell verändert werden. Die Lichtaussendung des Scheinwerfers kann hierbei kontinuierlich bzw. stufenlos bzw. rampenförmig verändert werden. Dabei kann die Lichtaussendung des zumindest einen Scheinwerfers von der Eingangsabstrahlcharakteristik zu der Zwischenabstrahlcharakteristik und zusätzlich oder alternativ die Lichtaussendung des zumindest einen Scheinwerfers von der Zwischenabstrahlcharakteristik zu der Ausgangsabstrahlcharakteristik graduell verändert werden. Eine solche graduelle Veränderung bietet den Vorteil, dass abrupte Sprünge bei der Veränderung der Abstrahlcharakteristiken vermieden werden können, so dass sich das Auge des Fahrers besser an die jeweils neu eingestellte Abstrahlcharakteristik gewöhnen kann. Somit steigt die Fahrsicherheit, da potentielle Gefahren besser wahrgenommen werden können.

Gemäß einer Ausführungsform kann zumindest einer der Schritte des Veränderns durchgeführt werden, wenn das Veränderungsfreigabesignal einen Wert aufweist, der anzeigt, dass zumindest eine Freigabebedingung zur Veränderung der Lichtaussendung erfüllt ist. Somit kann zumindest einer der Schritte des Veränderns ansprechend auf einen spezifizierten Wert bzw. logischen Pegel des Veränderungsfreigabesignals durchgeführt werden. Das Veränderungsfreigabesignal kann den spezifizierten Wert bzw. logischen Pegel aufweisen, wenn die Freigabebedingung zur Veränderung der Lichtaussendung erfüllt ist. Dabei kann die erfüllte Freigabebedingung beispielsweise eine Abwesenheit anderer Fahrzeuge in einem blendungsrelevanten Verkehrsraum, eine aktuelle Position des Fahrzeugs außerhalb geschlossener Ortschaften oder dergleichen definieren. Wenn das Veränderungsfreigabesignal einen anderen Wert bzw. logischen Pegel aufweist, wird zumindest einer der Schritte des Veränderns nicht durchgeführt. Auch kann das Veränderungsfreigabesignal während der Entprellzeit teilweise oder durchgehend empfangen werden. Ist die Freigabebedingung während der Entprellzeit nicht mehr erfüllt und weist somit das Veränderungsfreigabesignal nicht mehr den spezifizierten Wert auf, kann die Durchführung zumindest eines Schrittes des Veränderns abgebrochen oder rückgängig gemacht werden. Eine solche Ausführungsform bietet den Vorteil, dass die Veränderung der Lichtaussendung nur durchgeführt wird, wenn keine Gefahr besteht, dass beispielsweise andere Verkehrsteilnehmer dadurch geblendet werden. Somit kann die Verkehrssicherheit verbessert werden.

Auch kann ein Schritt des Bestimmens der Zwischenabstrahlcharakteristik basierend auf Fahrzeugeigenschaften und zusätzlich oder alternativ auf Fahrtdaten des Fahrzeugs vorgesehen sein. Fahrzeugeigenschaften betreffen beispielsweise eine Anbauhöhe und Ausführungsform der Scheinwerfer des Fahrzeugs. Fahrdaten betreffen beispielweise eine aktuelle Geschwindigkeit oder Gierrate des Fahrzeugs. Dabei kann der Schritt des Bestimmens während der Entprellzeit und/oder der Entprellstrecke ausgeführt werden. Insbesondere kann der Schritt des Bestimmens während der Entprellzeit einmal oder mehrmals durchgeführt werden. Hierbei kann eine jeweils aktuell bestimmte Zwischenabstrahlcharakteristik für die Steuerung der Lichtaussendung verwendet werden. Anders ausgedrückt kann nach dem Schritt des Veränderns der Lichtaussendung von der Eingangsabstrahlcharakteristik zu der Zwischenabstrahlcharakteristik, die Zwischenabstrahlcharakteristik abhängig von einer mehrmaligen Durchführung des Schrittes des Bestimmens aktualisiert werden. Eine solche Bestimmung der Zwischenabstrahlcharakteristik bietet den Vorteil, dass somit eine für die aktuelle Fahrsituation passende Zwischenabstrahlcharakteristik vorliegt. So kann eine Blendung anderer Verkehrsteilnehmer während der Entprellzeit weiter verringert werden.

Dabei kann im Schritt des Bestimmens die Zwischenabstrahlcharakteristik zusätzlich basierend auf einer Information über eine Steigung einer Fahrbahn bestimmt werden, auf der sich das Fahrzeug bewegt. Die Steigung der Fahrbahn kann beispielsweise mittels einer Kamera mit einem Messprogramm zur Höhenschätzung, mittels eines Navigationsgeräts mit Höhenkarte, oder einer sonstigen Einrichtung, die ein Höhenprofil in Fahrtrichtung vor dem Fahrzeug messen, schätzen oder bestimmen kann, ermittelt werden. Somit kann eine Information über die Steigung empfangen und im Schritt des Bestimmens der Zwischenabstrahlcharakteristik verwendet werden, um die Zwischenabstrahlcharakteristik beispielsweise an das Höhenprofil anzupassen. Eine solche Geländeanpassung bietet den Vorteil, dass sowohl eine Sichtweite als auch eine Blendungsvermeidung verbessert werden können.

Ferner kann ein Schritt des Ermittelns eines Zeitpunkts zur Durchführung des Schrittes des Veränderns der Lichtaussendung des zumindest einen Scheinwerfers von der Eingangsabstrahlcharakteristik zu der Zwischenabstrahlcharakteristik ansprechend auf das Veränderungsfreigabesignal vorgesehen sein. Es kann hierbei ein Zeitpunkt ermittelt werden, der innerhalb der Entprellzeit liegt. Beispielsweise kann der Zeitpunkt so ermittelt werden, dass der Schritt des Veränderns der Lichtaussendung des zumindest einen Scheinwerfers von der Eingangsabstrahlcharakteristik zu der Zwischenabstrahlcharakteristik zeitlich unmittelbar ansprechend auf einen Empfang des Veränderungsfreigabesignals durchgeführt wird. Eine solche Zeitpunktermittlung bietet den Vorteil, dass auf eine aktuelle Verkehrssituation mit möglichen anderen Verkehrsteilnehmern in einem blendungsrelevanten Verkehrsbereich Rücksicht genommen werden kann und die Durchführung des Schrittes des Veränderns zu einem geeigneten Zeitpunkt erfolgen kann. Damit sinkt die Gefahr einer Blendung anderer Verkehrsteilnehmer.

Zudem ist erfindungsgemäß ein Schritt des Durchführens eines Vergleichs der Eingangsabstrahlcharakteristik und der Zwischenabstrahlcharakteristik vorgesehen. Dabei ist der Schritt des Veränderns der Lichtaussendung des zumindest einen Scheinwerfers von der Eingangsabstrahlcharakteristik zu der Zwischenabstrahlcharakteristik abhängig von dem Vergleich durchgeführt. Steht die Eingangsabstrahlcharakteristik zu der Zwischenabstrahlcharakteristik in einem ersten Verhältnis, so ist der Schritt des Veränderns der Lichtaussendung des zumindest einen Scheinwerfers von der Eingangsabstrahlcharakteristik zu der Zwischenabstrahlcharakteristik durchgeführt. Steht die Eingangsabstrahlcharakteristik zu der Zwischenabstrahlcharakteristik in einem zweiten Verhältnis oder entspricht derselben, so ist eine Durchführung des Schrittes des Veränderns der Lichtaussendung des zumindest einen Scheinwerfers von der Eingangsabstrahlcharakteristik zu der Zwischenabstrahlcharakteristik übersprungen. Dies bietet den Vorteil, dass unabhängig von der Eingangsabstrahlcharakteristik stets eine geeignete Zwischenabstrahlcharakteristik eingestellt wird.

Des Weiteren kann ein Schritt des Veränderns der Lichtaussendung des zumindest einen Scheinwerfers von der Zwischenabstrahlcharakteristik zu mindestens einer weiteren Zwischenabstrahlcharakteristik vorgesehen sein. Dabei kann im Schritt des Veränderns die Lichtaussendung des zumindest einen Scheinwerfers nach Ablauf der Entprellzeit und/oder der Entprellstrecke von der mindestens einen weiteren Zwischenabstrahlcharakteristik zu der Ausgangsabstrahlcharakteristik verändert werden. Die mindestens eine weitere Zwischenabstrahlcharakteristik kann wertemäßig zwischen der Zwischenabstrahlcharakteristik und der Ausgangsabstrahlcharakteristik liegen. Somit können zwischen der Eingangsabstrahlcharakteristik und der Ausgangsabstrahlcharakteristik auch mehrere Zwischenabstrahlcharakteristiken liegen. Diese Zwischenabstrahlcharakteristiken können bei der gesamten Veränderung der Lichtaussendung von der Eingangsabstrahlcharakteristik zu der Ausgangsabstrahlcharakteristik eingenommen bzw. durchlaufen werden. Eine solche weitere Zwischenabstrahlcharakteristik bietet den Vorteil, dass bei der Veränderung der Lichtaussendung des zumindest einen Scheinwerfers abrupte Sprünge bzw. Änderungen der Abstrahlcharakteristiken weiter verringert werden können.

Die vorliegende Erfindung schafft ferner eine Vorrichtung, die ausgebildet ist, um die Schritte des erfindungsgemäßen Verfahrens durchzuführen bzw. umzusetzen. Insbesondere kann die Vorrichtung Einrichtungen aufweisen, die ausgebildet sind, um je einen Schritt des Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einer Vorrichtung ausgeführt wird.

Die Erfindung wird anhand der beigefügten Zeichnungen beispielhaft näher erläutert. Es zeigen:
- Figuren 1A bis 2E: schematische Darstellungen verschiedener Abstrahlcharakteristiken von Fahrzeugscheinwerfern;
- Fig. 3: eine schematische Darstellung eines Fahrzeugs mit einer Steuervorrichtung gemäß einem Ausführungsbeispiel der vorliegenden Erfindung;
- Fig. 4: ein Ablaufdiagramm eines Verfahrens teilweise gemäß einem Ausführungsbeispiel der vorliegenden Erfindung;
- Figuren 5A bis 8D: Darstellungen verschiedener Abstrahlcharakteristiken von Fahrzeugscheinwerfern, gemäß Ausführungsbeispielen der vorliegenden Erfindung; und
- Figuren 9 und 10: Ablaufdiagramme von Algorithmen gemäß Ausführungsbeispielen der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

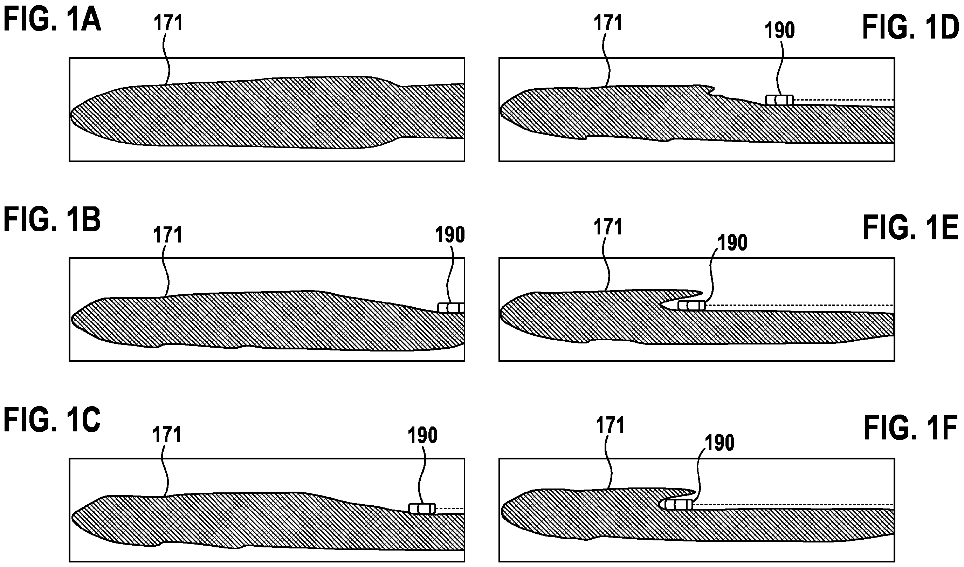

Die Figuren 1A bis 1F zeigen schematische Darstellungen verschiedener Abstrahlcharakteristiken 171 von Fahrzeugscheinwerfern. Die Abstrahlcharakteristiken 171 sind hierbei als Lichtverteilungen bzw. Reichweiten oder Leuchtweiten von Fahrzeugscheinwerfern dargestellt. Genau gesagt können die verschiedenen Abstrahlcharakteristiken 171 mittels eines Fernlichtassistenten, wie beispielsweise AHC (Adaptive High Beam Control) eingestellt sein. Dabei sind die Abstrahlcharakteristiken 171 aus der Vogelperspektive gezeigt. In den Figuren 1A bis 1F sind die Abstrahlcharakteristiken 171 jeweils von Scheinwerfern eines Fahrzeugs (nicht gezeigt) erzeugt, wobei ein solches Fahrzeug an einem jeweils linken Bildrand der Figuren 1A bis 1F angeordnet ist. Die Abstrahlcharakteristiken 171 weisen eine Lichtverteilung bzw. einen Verlauf von Lichtintensitäten auf. In den Figuren 1B bis 1F ist auch ein Fremdfahrzeug 190 gezeigt. Im Verlauf der Figuren von 1B bis 1F ist das Fremdfahrzeug 190 in einem zunehmend geringeren Abstand bezüglich des die Abstrahlcharakteristiken 171 erzeugenden Fahrzeugs angeordnet. Dabei sind die Abstrahlcharakteristiken 171 jeweils so angepasst,
dass das Fremdfahrzeug 190 sich außerhalb der Lichtverteilung bzw. Reichweite der Fahrzeugscheinwerfer befindet. Da Abblendlicht beispielsweise für Geschwindigkeiten über 80 km/h eine geringe Leuchtweite aufweist, wurde daher AHC entwickelt. AHC kann die Reichweite eines Scheinwerfers dynamisch anpassen, sodass eine maximale Reichweite des Scheinwerfers ohne Blendung anderer Fahrzeuge 190 eingestellt wird. Es findet somit eine Anpassung der Reichweite statt.

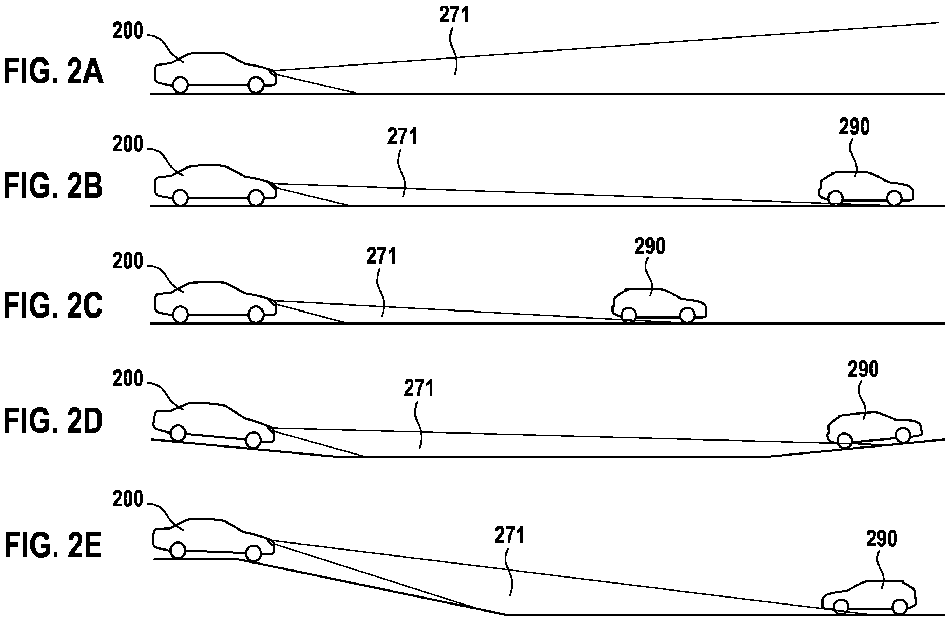

Die Figuren 2A bis 2E zeigen schematische Darstellungen verschiedener Abstrahlcharakteristiken von Fahrzeugscheinwerfern. Gezeigt sind ein Fahrzeug 200 sowie verschiedene Abstrahlcharakteristiken 271. In den Figuren 2B bis 2E ist zudem jeweils ein Fremdfahrzeug 290 gezeigt. Die Abstrahlcharakteristiken 271 sind hierbei als Lichtkegel von Scheinwerfern des Fahrzeugs 200 dargestellt. Die verschiedenen Abstrahlcharakteristiken 271 können mittels eines Fernlichtassistenten, wie beispielsweise AHC (Adaptive High Beam Control) eingestellt sein. Dabei sind die Abstrahlcharakteristiken 171 ein einer Seitenansicht gezeigt. In Fig. 2B ist das Fremdfahrzeug 290 in einem größeren Abstand relativ zu dem Fahrzeug 200 angeordnet als in Fig. 2C. In den Figuren 2D und 2E weist eine Fahrbahn, auf der sich das Fahrzeug 200 und das Fremdfahrzeug 290 befinden, zumindest eine Steigung bzw. ein Gefälle auf. Dabei sind die Abstrahlcharakteristiken 271 jeweils so angepasst, dass das Fremdfahrzeug 290 sich außerhalb der Lichtverteilung bzw. Reichweite der Fahrzeugscheinwerfer befindet. Die Einstellung der Reichweite bzw. Abstrahlcharakteristik 271 erfolgt über eine Einstellung unterschiedlicher Abstrahlwinkel der Scheinwerfer des Fahrzeugs 200.

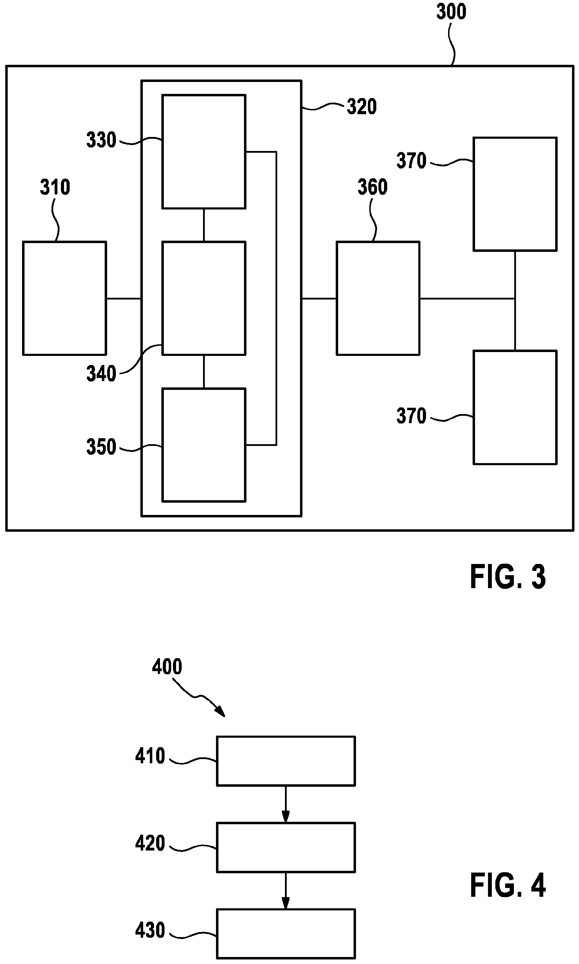

Fig. 3 zeigt eine schematische Darstellung eines Fahrzeugs mit einer Steuervorrichtung gemäß einem Ausführungsbeispiel der vorliegenden Erfindung. Das Fahrzeug 300 weist eine Freigabeeinrichtung 310, eine Steuervorrichtung 320 mit einer Empfangseinrichtung 330, einer ersten Veränderungseinrichtung 340 sowie einer zweiten Veränderungseinrichtung 350, ein Ansteuergerät 360 und zwei Scheinwerfer 370 auf. Die Freigabeeinrichtung 310 ist mit der Steuervorrichtung 320 über eine Kommunikationsschnittstelle, beispielsweise zumindest eine Signalleitung oder dergleichen verbunden. Das Ansteuergerät 360 ist mit der Steuervorrichtung 320 über eine weitere Kommunikationsschnittstelle, beispielsweise zumindest eine Signalleitung oder dergleichen, verbunden. Somit ist die Steuervorrichtung 320 zwischen die Freigabeeinrichtung 310 und das Ansteuergerät 360 geschaltet. Die Scheinwerfer 370 sind mit dem Ansteuergerät 360 über eine weitere Kommunikationsschnittstelle, beispielsweise zumindest eine Signalleitung oder dergleichen verbunden. Somit ist das Ansteuergerät 360 zwischen die Steuervorrichtung 320 und die Scheinwerfer 370 geschaltet. Auch wenn es in Fig. 3 so nicht dargestellt ist, kann das Ansteuergerät 360 auch ein Teil der Steuervorrichtung 320 sein oder kann die Steuervorrichtung 320 auch ein Teil des Ansteuergerätes 360 sein.

Die Freigabeeinrichtung 310 kann beispielsweise eine Fahrzeugkamera, eine Bildverarbeitungselektronik beispielsweise für geeignete Verfahren zur Bildverarbeitung, Bildanalyse, Mustererkennung, Objekterkennung und/oder dergleichen, Fahrzeugsensoren zum Gewinnen von Fahrtdaten, ein Sendeempfangsgerät für Positionsdaten, eine sonstige Signalverarbeitungselektronik, etc. aufweisen. Die Freigabeeinrichtung 310 ist ausgebildet, um ein Veränderungsfreigabesignal zu erzeugen. Verschiedene logische Werte des Veränderungsfreigabesignals können eine Erlaubnis oder ein Verbot, sowie gegebenenfalls weitere Informationen, zur Durchführung einer Veränderung der Lichtaussendung der Scheinwerfer 370 von einer Eingangsabstrahlcharakteristik zu einer Ausgangsabstrahlcharakteristik repräsentieren. Die Durchführung der Veränderung der Lichtaussendung der Scheinwerfer 370 von der Eingangsabstrahlcharakteristik zu der Ausgangsabstrahlcharakteristik erfolgt hierbei während einer ansprechend auf das Veränderungsfreigabesignal beginnenden Entprellzeit. Bei diesem und den weiteren Ausführungsbeispielen kann zusätzlich oder anstelle der Entprellzeit auch eine ansprechend auf das Veränderungsfreigabesignal beginnenden Entprellstrecke verwendet werden. Die Freigabeeinrichtung 310 ist ausgebildet, um das Veränderungsfreigabesignal an die Steuervorrichtung 320 auszugeben.

Die Steuervorrichtung 320 weist die Empfangseinrichtung 330, die erste Veränderungseinrichtung 340 sowie die zweite Veränderungseinrichtung 350 auf. Die Steuervorrichtung 320 ist ausgebildet, um eine Steuerung einer Lichtaussendung der Scheinwerfer 370 des Fahrzeugs 300 durchzuführen.

Die Empfangseinrichtung 330 ist ausgebildet, um das Veränderungsfreigabesignal von der Freigabeeinrichtung 310 zu empfangen. Wenn das Veränderungsfreigabesignal einen logischen Wert aufweist, der eine Erlaubnis zur Durchführung der Veränderung der Lichtaussendung der Scheinwerfer 370 von der Eingangsabstrahlcharakteristik zu der Ausgangsabstrahlcharakteristik repräsentiert, kann die Empfangseinrichtung 330 ausgebildet sein, um das Veränderungsfreigabesignal an die erste Veränderungseinrichtung 340 und zusätzlich oder alternativ an die zweite Veränderungseinrichtung 350 auszugeben bzw. weiterzuleiten. Ansprechend auf den Empfang des Veränderungsfreigabesignals mit einem logischen Wert, der eine Erlaubnis zur Durchführung der Veränderung repräsentiert, kann die Empfangseinrichtung 330 zusätzlich oder alternativ ausgebildet sein, um einen Zeitgeber bzw. Timer zu starten, ein erstes Zeitsignal zu erzeugen und an die erste Veränderungseinrichtung 340 auszugeben und zusätzlich oder alternativ ein zweites Zeitsignal zu erzeugen und an die zweite Veränderungseinrichtung 350 auszugeben. Mit dem Empfang des Veränderungsfreigabesignals mit einem logischen Wert, der eine Erlaubnis zur Durchführung der Veränderung repräsentiert, beginnt die Entprellzeit.

Die erste Veränderungseinrichtung 340 ist ausgebildet, um das Veränderungsfreigabesignal und zusätzlich oder alternativ das erste Zeitsignal von der Empfangseinrichtung 330 zu empfangen. Die erste Veränderungseinrichtung 340 ist ausgebildet, um die Lichtaussendung der Scheinwerfer 370 ansprechend auf das Veränderungsfreigabesignal und zusätzlich oder alternativ das erste Zeitsignal von der Eingangsabstrahlcharakteristik zu einer Zwischenabstrahlcharakteristik zu verändern bzw. eine Veränderung zu bewirken. Dazu kann die erste Veränderungseinrichtung 340 oder eine derselben zugeordnete Einrichtung optional die Zwischenabstrahlcharakteristik bestimmen. Die Bestimmung kann basierend auf Fahrzeugeigenschaften und/oder Fahrtdaten des Fahrzeugs 300 und gegebenenfalls zusätzlich basierend auf einer Information über eine Steigung einer Fahrbahn, auf der sich das Fahrzeug 300 bewegt, erfolgen. Auch kann die erste Veränderungseinrichtung 340 oder eine derselben zugeordnete Einrichtung optional einen Zeitpunkt zur Durchführung der Veränderung ermitteln, beispielsweise unter Verwendung des ersten Zeitsignals. Die erste Veränderungseinrichtung 340 ist ausgebildet, um die Zwischenabstrahlcharakteristik und/oder den Zeitpunkt in Gestalt einer ersten Steuerinformation an das Ansteuergerät 360 und optional an die zweite Veränderungseinrichtung 350 auszugeben.

Die zweite Veränderungseinrichtung 350 ist ausgebildet, um das Veränderungsfreigabesignal und zusätzlich oder alternativ das zweite Zeitsignal von der Empfangseinrichtung 330 und optional die erste Steuerinformation von der ersten Veränderungseinrichtung 340 zu empfangen. Die zweite Veränderungseinrichtung 350 ist ausgebildet, um die Lichtaussendung der Scheinwerfer 370 bei Ablauf der Entprellzeit von der Zwischenabstrahlcharakteristik zu der Ausgangsabstrahlcharakteristik zu verändern bzw. die Veränderung zu bewirken. Dabei kann beispielsweise das zweite Zeitsignal von der Empfangseinrichtung 330 den Ablauf der Entprellzeit anzeigen oder der Ablauf der Entprellzeit kann basierend auf dem zweiten Zeitsignal ermittelt werden. Auch kann die zweite Veränderungseinrichtung 350 oder eine derselben zugeordnete Einrichtung optional einen Zeitpunkt zur Durchführung der Veränderung ermitteln, beispielsweise unter Verwendung des zweiten Zeitsignals. Die zweite Veränderungseinrichtung 350 ist ausgebildet, um die Ausgangsabstrahlcharakteristik und/oder den Zeitpunkt in Gestalt einer zweiten Steuerinformation an das Ansteuergerät 360 auszugeben.

Das Ansteuergerät 360 ist ausgebildet, um die erste Steuerinformation und/oder zweite Steuerinformation von der Steuervorrichtung 320 zu empfangen. Das Ansteuergerät 360 ist auch ausgebildet, um ein Steuersignal zur Ansteuerung der Scheinwerfer 370 zu erzeugen. Das Ansteuergerät kann bei der Erzeugung des Steuersignals die erste Steuerinformation und/oder zweite Steuerinformation zum Steuern der Lichtaussendung der Scheinwerfer 370 berücksichtigen bzw. verwenden. Das Steuersignal kann somit die erste Steuerinformation und/oder zweite Steuerinformation beinhalten. Das Ansteuergerät 360 ist ausgebildet, um das Steuersignal an die Scheinwerfer 370 auszugeben.

Die Scheinwerfer 370 können das Steuersignal von dem Ansteuergerät 360 empfangen. Die erste Steuerinformation und/oder zweite Steuerinformation in dem Steuersignal kann bewirken, dass die Lichtaussendung der Scheinwerfer 370 während der Entprellzeit von der Eingangsabstrahlcharakteristik über die Zwischenabstrahlcharakteristik zu der Ausgangsabstrahlcharakteristik verändert wird.

Fig. 4 zeigt ein Ablaufdiagramm eines Verfahrens 400 zur Steuerung einer Lichtaussendung zumindest eines Scheinwerfers eines Fahrzeugs, teilweise gemäß einem Ausführungsbeispiel der vorliegenden Erfindung. Das Verfahren 400 weist einen Schritt des Empfangens 410 eines Veränderungsfreigabesignals zur Durchführung einer Veränderung der Lichtaussendung des zumindest einen Scheinwerfers von einer Eingangsabstrahlcharakteristik zu einer Ausgangsabstrahlcharakteristik während einer ansprechend auf das Veränderungsfreigabesignal beginnenden Entprellzeit auf. Das Verfahren 400 weist auch einen Schritt des Veränderns 420 der Lichtaussendung des zumindest einen Scheinwerfers von der Eingangsabstrahlcharakteristik zu einer Zwischenabstrahlcharakteristik ansprechend auf das Veränderungsfreigabesignal auf. Das Verfahren 400 weist zudem einen Schritt des Veränderns 430 der Lichtaussendung des zumindest einen Scheinwerfers von der Zwischenabstrahlcharakteristik zu der Ausgangsabstrahlcharakteristik bei Ablauf der Entprellzeit auf. Das Verfahren 400 kann in Verbindung mit einer Vorrichtung, wie beispielsweise der Steuervorrichtung aus Fig. 3, vorteilhaft ausgeführt werden. Somit kann die Steuervorrichtung aus Fig. 3 ausgebildet sein, um die Schritte des Verfahrens 400 durchzuführen.

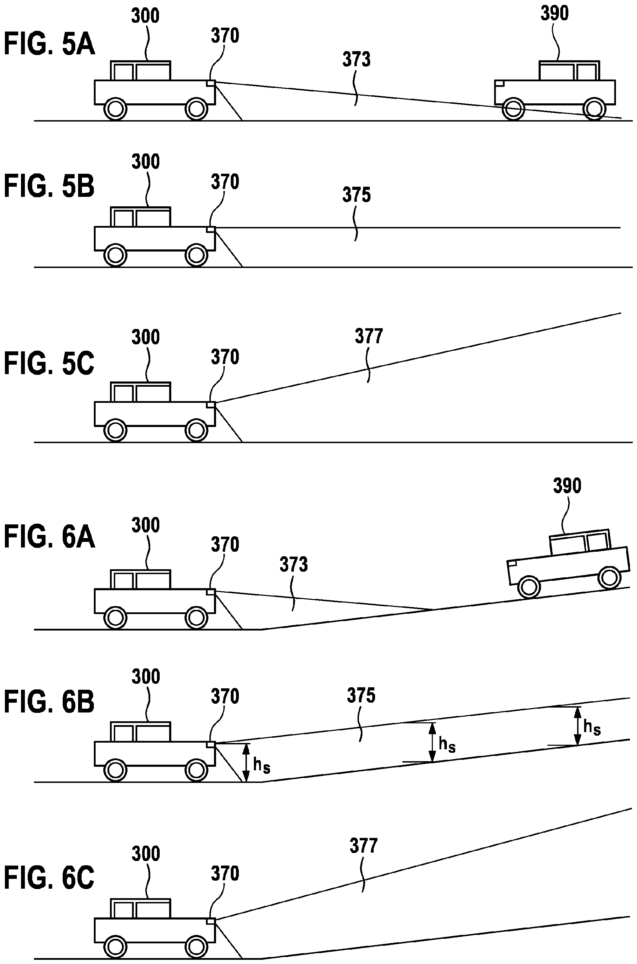

Die Figuren 5A bis 5C zeigen schematische Darstellungen verschiedener Abstrahlcharakteristiken von Fahrzeugscheinwerfern, gemäß Ausführungsbeispielen der vorliegenden Erfindung. Gezeigt ist in jeder der Figuren 5A bis 5C ein Fahrzeug 300 mit einem Scheinwerfer 370 und einer Abstrahlcharakteristik in Form eines Lichtkegels in einer Seitenansicht. Ferner ist jeweils eine ebene Fahrbahn gezeigt. Bei dem Fahrzeug 300 kann es sich um das Fahrzeug mit der Steuervorrichtung aus Fig. 3 handeln. In Fig. 5A handelt es sich bei der Abstrahlcharakteristik um eine Eingangsabstrahlcharakteristik 373 und es ist zusätzlich ein Fremdfahrzeug 390 gezeigt. Die Eingangsabstrahlcharakteristik 373 kann beispielsweise einem Abblendlicht entsprechen. Die Eingangsabstrahlcharakteristik 373 bzw. der aufgrund derselben erzeugte Lichtkegel kann eine obere Grenze aufweisen, die mit der Fahrbahn im Bereich des Fremdfahrzeugs 390 konvergiert. Das Fremdfahrzeug 390 stellt bezüglich des Fahrzeugs 300 Gegenverkehr dar. In Fig. 5B handelt es sich bei der Abstrahlcharakteristik um eine Zwischenabstrahlcharakteristik 375 und es ist kein Fremdfahrzeug dargestellt. Die Zwischenabstrahlcharakteristik 375 bzw. der aufgrund derselben erzeugte Lichtkegel kann eine obere Grenze aufweisen, die näherungsweise parallel zu der Fahrbahn verläuft. In Fig. 5C handelt es sich bei der Abstrahlcharakteristik um eine Ausgangsabstrahlcharakteristik 377. Die Ausgangsabstrahlcharakteristik 377 kann beispielsweise einem Fernlicht oder dergleichen entsprechen. Die Ausgangsabstrahlcharakteristik 377 bzw. der aufgrund derselben erzeugte Lichtkegel kann eine obere Grenze aufweisen, die von der Fahrbahn divergiert.

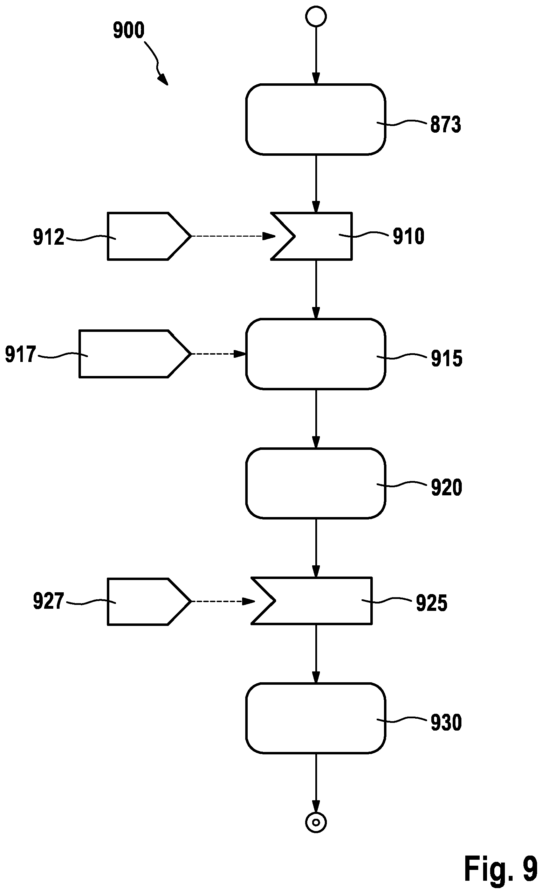

Die in den Figuren 5A bis 5C dargestellten Abstrahlcharakteristiken können sich bei Anwendung eines Verfahrens zur Steuerung einer Lichtaussendung, wie beispielsweise des Verfahrens aus Fig. 4 ergeben. Nachdem kein Fremdfahrzeug 390 mehr im Verkehrsraum ist, wird nach einer ersten Zeitdauer der Entprellzeit der Lichtkegel ausgehend von der Eingangsabstrahlcharakteristik 373 so weit angehoben, dass er 0° nicht übersteigt, d. h. parallel zur Ebene der Fahrbahn bzw. in Richtung Horizont abgestrahlt wird (siehe Fig. 5B). Die erste Zeitdauer der Entprellzeit kann auch gegen Null gehen, d. h. es kann sofort auf 0° gestellt werden, z. B. im Sinne einer Entgegenkommer-Entprellung. Durch die maximal horizontale Abstrahlung des Lichts in der Zwischenabstrahlcharakteristik 375 werden andere Verkehrsteilnehmer 390 beim Auftauchen idealerweise nicht geblendet, da die Hell-Dunkel-Grenze bis maximal auf die Höhe eines Scheinwerfers eines Fremdfahrzeugs 390 reicht. Der Fahrer des Fahrzeugs 300 hat dennoch eine weitere Sichtweite, da deutlich mehr Licht auf der Straße ist. Nach einer weiteren Zeitdauer der Entprellzeit, bei der es sich um eine Wartezeit handeln kann, wird die Hell-Dunkel-Grenze noch weiter angehoben und bei Bedarf auf Fernlicht 377 umgeschaltet (siehe Fig. 5C). In Fig. 9 ist ein prinzipieller Ablauf des zugrundeliegenden Algorithmus zur Abstrahlwinkelanpassung für Scheinwerfer zu sehen.

Die Figuren 6A bis 6C zeigen schematische Darstellungen verschiedener Abstrahlcharakteristiken von Fahrzeugscheinwerfern, gemäß Ausführungsbeispielen der vorliegenden Erfindung. Die Darstellung in den Figuren 6A bis 6C entspricht der Darstellung aus den Figuren 5A bis 5C mit der Ausnahme, dass die Fahrbahn teilweise geneigt ist. Genau gesagt ist die Fahrbahn von einem linken Bildrand aus bis zu einem Punkt zwischen dem Fahrzeug 300 und dem Fremdfahrzeug 390 in Fig. 6A ebnen und von diesem Punkt aus bis zu einem rechten Bildrand geneigt. In Fig. 6B ist zusätzlich eine Scheinwerfer-Anbauhöhe hₛ gezeigt. Die Zwischenabstrahlcharakteristik 375 bzw. der aufgrund derselben erzeugte Lichtkegel in Fig. 6B kann eine obere Grenze aufweisen, die in einem Abstand ungefähr gleich der Scheinwerfer-Anbauhöhe hₛ näherungsweise parallel zu dem geneigten Teil der Fahrbahn verläuft.

Die in den Figuren 6A bis 6C dargestellten Abstrahlcharakteristiken können sich bei Anwendung eines Verfahrens zur Steuerung einer Lichtaussendung, wie beispielsweise des Verfahrens aus Fig. 4 ergeben. Nutzt z. B. das Verfahren aus Fig. 4 oder die Steuervorrichtung aus. 3 einen Steigungssensor, wie beispielsweise eine Kamera mit einem Messprogramm zur Höhenschätzung, ein Navigationsgerät mit Höhenkarte etc., der das Höhenprofil vor dem Fahrzeug 300 misst bzw. schätzt, kann statt einem Abstrahlwinkel von 0° ein an das Höhenprofil angepasster Abstrahlwinkel der Zwischenabstrahlcharakteristik 375 einstellt werden. Der Abstrahlwinkel darf höchstens so groß sein, dass der Scheinwerfer-Lichtkegel die Scheinwerfer-Anbauhöhe hₛ nicht übersteigt (siehe Fig. 6B). Diese Anpassung der Hell-Dunkel-Grenze bei unebener Fahrbahn ist nicht auf die Verwendung eines Steigungssensors angewiesen und es kann z. B. lediglich eine Anhebung auf 0° erfolgen, wie in Fig. 5B.

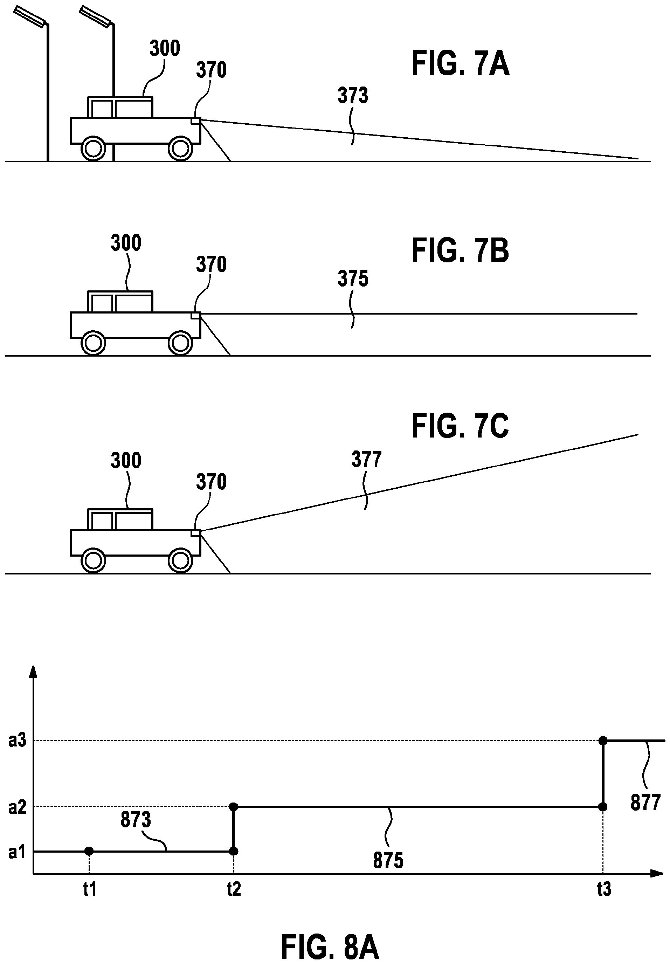

Die Figuren 7A bis 7C zeigen schematische Darstellungen verschiedener Abstrahlcharakteristiken von Fahrzeugscheinwerfern, gemäß Ausführungsbeispielen der vorliegenden Erfindung. Die Darstellung in den Figuren 7A bis 7C entspricht der Darstellung aus den Figuren 5A bis 5C mit der Ausnahme, dass in Fig. 7A beispielhaft zwei Straßenlaternen gezeigt sind, um ein durchgehend beleuchtetes Gebiet darzustellen.

Die in den Figuren 7A bis 7C dargestellten Abstrahlcharakteristiken können sich bei Anwendung eines Verfahrens zur Steuerung einer Lichtaussendung, wie beispielsweise des Verfahrens aus Fig. 4 ergeben. Innerhalb eines solchen durchgehend beleuchteten Gebiets, wie z. B. innerhalb einer Stadt, darf keine Ausgangsabstrahlcharakteristik 377 eingestellt bzw. kein Fernlicht eingeschaltet werden. Nach Verlassen der Stadt, darf wieder Fernlicht eingeschaltet werden. Hier kann ebenso die Hell-Dunkel-Grenze über eine Zwischenstufe bzw. Zwischenabstrahlcharakteristik 375 angehoben werden, wenn kein Fremdfahrzeug im Verkehrsraum ist. Somit wird die Zwischenstufe bzw. Zwischenabstrahlcharakteristik 375 nach dem Verlassen von durchgehender Straßenbeleuchtung eingestellt. Anschließend an die Zwischenstufe bzw. Zwischenabstrahlcharakteristik 375 kann die Ausgangsabstrahlcharakteristik 377 eingestellt werden.

Die Figuren 8A bis 8D zeigen Diagramme verschiedener Abstrahlcharakteristiken von Fahrzeugscheinwerfern, gemäß Ausführungsbeispielen der vorliegenden Erfindung. In jedem der Diagramme ist an der Abszissensachse die Zeit t aufgetragen, wobei drei Zeitwerte bzw. Zeitpunkte t1, t2 t3 eingezeichnet sind, und ist an der Ordinatenachse ein Scheinwerferwinkel a aufgetragen, wobei drei Scheinwerferwinkelwerte a1, a2 und a3 eingezeichnet sind. In jedem der Diagramme ist ein Verlauf des Scheinwerferwinkels a über die Zeit t gezeigt. Hierbei repräsentiert der Zeitabschnitt von dem Zeitpunkt t1 bis zu dem Zeitpunkt t3 eine Entprellzeit bei einem Verfahrens zur Steuerung einer Lichtaussendung zumindest eines Scheinwerfers eines Fahrzeugs, wie beispielsweise dem Verfahren aus Fig. 4. Die in den Figuren 8A bis 8D dargestellten Scheinwerferwinkelverläufe stellen Abstrahlcharakteristiken dar und können sich bei Anwendung des Verfahrens zur Steuerung einer Lichtaussendung aus Fig. 4 ergeben.

In Fig. 8A sind ein Eingangsscheinwerferwinkel 873, der einer Eingangsabstrahlcharakteristik beispielsweise in Form von Abblendlicht bzw. einer Anfangsstufe entspricht, ein Zwischenscheinwerferwinkel 875, der einer Zwischenabstrahlcharakteristik in Form einer blendungsreduzierten Zwischenstufe entspricht, und ein Ausgangsscheinwerferwinkel 877, der einer Ausgangsabstrahlcharakteristik in Form von Fernlicht bzw. einer Blendungsstufe entspricht, gezeigt. Der Eingangsscheinwerferwinkel 873 liegt zwischen dem Zeitpunkt t1, d. h. einem Beginn der Entprellzeit, und dem Zeitpunkt t2 konstant mit einem Wert a1 vor. Zum Zeitpunkt t2 erfolgt eine Erhöhung des Scheinwerferwinkels auf den Zwischenscheinwerferwinkel 875. Der Zwischenscheinwerferwinkel 875 liegt von dem Zeitpunkt t2 bis zu dem Zeitpunkt t3, d. h. einem Ende der Entprellzeit, konstant mit einem Wert a2 vor. Zum Zeitpunkt t3 erfolgt eine Erhöhung des Scheinwerferwinkels auf den Ausgangsscheinwerferwinkel 877 mit einem Wert a3. Der Wert a2 liegt hierbei zwischen dem Wert a1 und dem Wert a3. Unter zusätzlicher Bezugnahme auf das Verfahren aus Fig. 4 ist in Fig. 8A gezeigt, wie von der Anfangsstufe 873, beispielsweise nach Verschwinden des letzten Fremdfahrzeugs (t1), auf die blendungsreduzierte Zwischenstufe 875 (t2) umgeschaltet wird, bevor die Blendungsstufe 877, z. B. Fernlicht, eingeschaltet wird (t3). Hierbei erfolgt eine harte Umschaltung zwischen den Stufen.

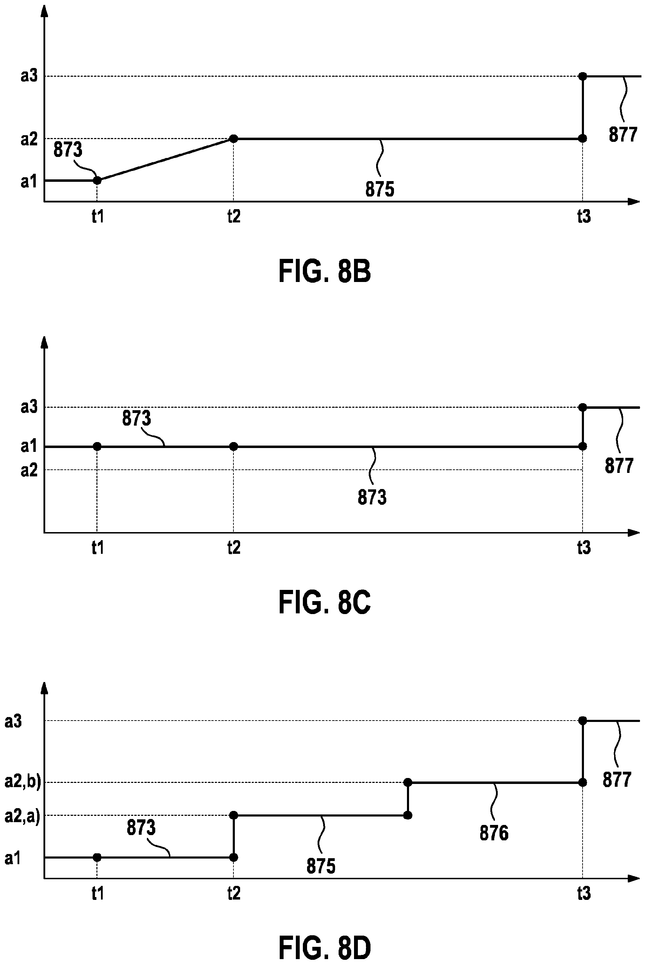

Die Darstellung in Fig. 8B entspricht der Darstellung aus Fig. 8A mit der Ausnahme, dass der Eingangsscheinwerferwinkel 873 mit dem Wert a1 zum Zeitpunkt t1, d. h. einem Beginn der Entprellzeit, vorliegt und bis zu dem Zeitpunkt t2 kontinuierlich auf den Zwischenscheinwerferwinkel 875 mit dem Wert a2 erhöht wird. Unter zusätzlicher Bezugnahme auf das Verfahren aus Fig. 4 ist in Fig. 8A ein rampenförmiger Anstieg des Scheinwerferwinkels von der Anfangsstufe 873 (t1) auf die Zwischenstufe 875 (t2) gezeigt, nachdem kein Fremdfahrzeug mehr im Bild ist (t1) oder man aus einer Stadt herausgefahren ist (t1). Es erfolgt jedoch eine harte Umschaltung auf die Blendungsstufe 877 (t3). Zwischen dem Zeitpunkt t1 und dem Zeitpunkt t2 erfolgt also eine kontinuierliche Umschaltung zur Zwischenstufe 875, dann zum Zeitpunkt t3 eine harte Umschaltung zur Blendungsstufe 877. Es ist unter Verwendung eines solchen rampenförmigen Anstiegs möglich, dass das Anfahren der verschiedenen Stufen (relativ) langsam geschieht, wobei der Scheinwerferwinkel rampenförmig verändert werden kann, wie es in Fig. 8B gezeigt ist.

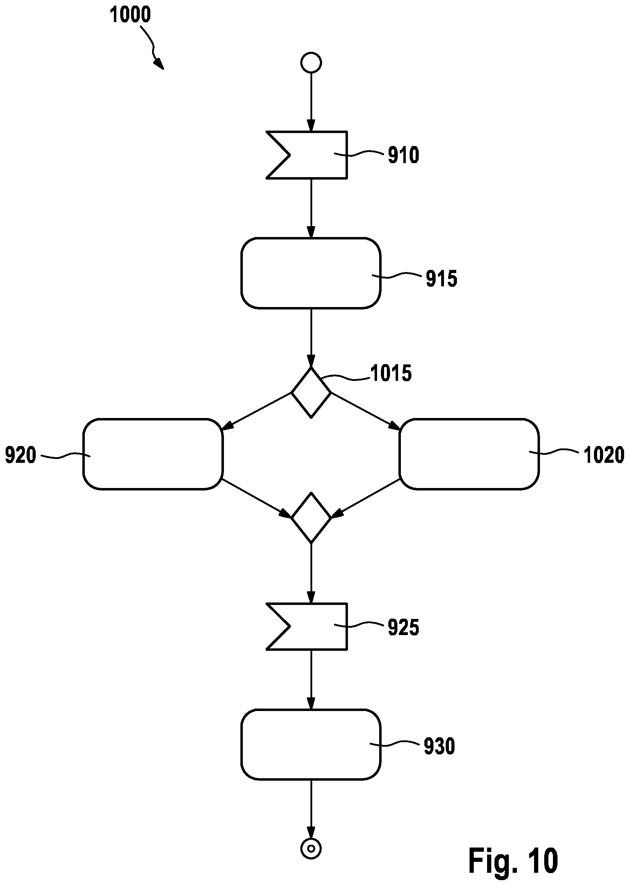

Die Darstellung in Fig. 8C entspricht der Darstellung aus Fig. 8A mit der Ausnahme, dass der Eingangsscheinwerferwinkel 873 zwischen dem Zeitpunkt t1, und dem Zeitpunkt t3 konstant mit einem Wert a1 vor. Hierbei ist der Wert a1 relativ zu dem entsprechenden Wert a1 aus den Figuren 8A und 8B erhöht und liegt zwischen dem Wert a2 und dem Wert a3. Zum Zeitpunkt t3 erfolgt eine Erhöhung des Scheinwerferwinkels von dem Eingangsscheinwerferwinkel 873 auf den Ausgangsscheinwerferwinkel 877. Unter zusätzlicher Bezugnahme auf das Verfahren aus Fig. 4 ist in Fig. 8C somit eine Beibehaltung des Eingangsscheinwerferwinkels 873 gezeigt, wenn der Startwinkel bzw. Eingangsscheinwerferwinkel 873 größer ist als Soll-Winkel a2 der Zwischenstufe im Vergleich zum Standard-Verhalten, wie es in Fig. 8A gezeigt ist. Somit kann ein erhöhter Eingangsscheinwerferwinkel 873 beibehalten werden, wenn der Startwinkel a1 höher als die normale Zwischenstufe a2 ist. Wenn beispielsweise mittels AHC zum Zeitpunkt t1 ein Abstrahlwinkel eingestellt ist, der oberhalb der Horizontalen (0°) bzw. höher als die von einem Steigungssensor gemessene Steigung ist, bleibt diese anfängliche Lichtverteilung als Zwischenstufe erhalten, wie bei einer klassischen Entprellung. Dadurch wird die Sichtweite des Fahrers nicht reduziert, aber aufgrund der größeren Blendgefahr auch nicht erhöht, wie es in Fig. 8C gezeigt ist. Ein Ablaufdiagramm eines zu Grunde liegenden Algorithmus ist in Fig. 10 gezeigt.

Die Darstellung in Fig. 8D entspricht der Darstellung aus Fig. 8A mit der Ausnahme, dass statt des einen Zwischenscheinwerferwinkels mit dem Wert a2 hier nun zwei Zwischenscheinwerferwinkel gezeigt sind. Ein erster Zwischenscheinwerferwinkel 874 weist einen Wert a2, a) auf unter ein zweiter Zwischenscheinwerferwinkel 876 weist einen Wert a2, b) auf. Eine Beziehung aller Winkelwerte in Fig. 8D lautet hierbei a1 < a2, a) < a2, b) < a3. Zum Zeitpunkt t2 erfolgt eine Erhöhung des Eingangsscheinwerferwinkels 873 auf den ersten Zwischenscheinwerferwinkel 875. Während der Zeitdauer zwischen dem Zeitpunkt t2 und dem Zeitpunkt t3 erfolgt eine Erhöhung des ersten Zwischenscheinwerferwinkels 874 auf den zweiten Zwischenscheinwerferwinkel 876. Zum Zeitpunkt t3 erfolgt eine Erhöhung des zweiten Zwischenscheinwerferwinkels 876 auf den Ausgangsscheinwerferwinkel 877. Somit zeigt Fig. 8C ein mögliches Ausführungsbeispiel mit mehreren Stufen bzw. Zwischenstufen, wobei nicht nur eine Zwischenstufe, sondern prinzipiell beliebig viele Zwischenstufen vorgesehen werden können.

Fig. 9 zeigt ein Ablaufdiagramm eines Verfahrens zur Steuerung einer Lichtaussendung zumindest eines Scheinwerfers eines Fahrzeugs teilweise gemäß einem Ausführungsbeispiel der vorliegenden Erfindung in Form eines Algorithmus 900.

Zu Beginn liegt ein Zustand 873 vor, der einer niedrigen Hell-Dunkel-Grenze, einem Abblendlicht bzw. dem Eingangsscheinwerferwinkel aus den Figuren 8A, 8B bzw. 8D entsprechen kann. Bei einem Schritt 910 wird auf einen ersten Timer 912 bzw. auf ein Signal "flow" von demselben gewartet. Bei einem Schritt 915 wird eine Zwischenstufe berechnet. Dabei kann ein Steigungssensor 917 Sensordaten als eine Eingangsgröße für den Schritt 915 liefern, wobei der Steigungssensor 917 optional ist. Bei einem Schritt 920 wird die Zwischenstufe angefahren. Bei der Zwischenstufe kann es sich um die Zwischenstufe bzw. einen Zwischenscheinwerferwinkel aus den Figuren 8A, 8B bzw. 8D, beispielsweise einen Abstrahlwinkel von 0° handeln. Bei einem Schritt 925 wird auf einen Timer 927 einer nächsthöheren Stufe bzw. auf ein Signal "flow" von demselben gewartet. Wenn mehrere Zwischenstufen vorgesehen sind, können der Schritt 915 und/oder der Schritt 925 optional sein. Bei einem Schritt 930 wird eine hohe Hell-Dunkel-Grenze angefahren, die einem Fernlicht bzw. dem Ausgangsscheinwerferwinkel aus den Figuren 8A bis 8D entsprechen kann.

Somit zeigt Fig. 9 ein Ablaufdiagramm eines Algorithmus ohne Beibehaltung höherer Winkel. Möglich ist eine prinzipielle Erweiterung mit einem Steigungssensor und mehreren Zwischenstufen.

Fig. 10 zeigt ein Ablaufdiagramm eines Verfahrens zur Steuerung einer Lichtaussendung zumindest eines Scheinwerfers eines Fahrzeugs gemäß einem Ausführungsbeispiel der vorliegenden Erfindung in Form eines Algorithmus 1000.

Bei einem Schritt 910 wird festgestellt, dass eine erste Zeitdauer einer Entprellzeit abgelaufen ist. Bei einem Schritt 915 wird eine Zwischenstufe bzw. ein Soll-Winkel für eine Zwischenstufe berechnet. Bei einem Schritt 1015 wird überprüft, ob der Soll-Winkel für die Zwischenstufe größer ist als ein Ist-Winkel. Wenn der Soll-Winkel für die Zwischenstufe größer ist als der Ist-Winkel, dann erfolgt ein Schritt 920, bei dem der Soll-Winkel für die Zwischenstufe angefahren wird. Der Soll-Winkel für die Zwischenstufe kann dem Zwischenscheinwerferwinkel aus den Figuren 8A, 8B bzw. 8D, beispielsweise einem Abstrahlwinkel von 0° entsprechen. Wenn der Soll-Winkel für die Zwischenstufe nicht größer ist als der Ist-Winkel, dann erfolgt ein Schritt 1020, bei dem der Ist-Winkel beibehalten wird. Bei einem Schritt 925 wird festgestellt, dass eine zweite Zeitdauer der Entprellzeit abgelaufen ist. Bei einem Schritt 930 wird ein hoher Scheinwerferwinkel, der dem Ausgangsscheinwerferwinkel aus den Figuren 8A bis 8D entsprechen kann, beispielsweise Fernlicht, angefahren.

Somit zeigt Fig. 10 ein Ablaufdiagramm eines Algorithmus zur Beibehaltung des maximalen Winkels bei der Ansteuerung.

Unter Bezugnahme auf die Figuren 3 bis 10 werden Ausführungsbeispiele der vorliegenden Erfindung im Folgenden zusammenfassend erläutert.

Bei dem Verfahren 400, das in Verbindung mit der Steuervorrichtung 320 ausgeführt werden kann, handelt es sich gewissermaßen um eine Detailumsetzung der gleitenden Leuchtweite (GLW), um ein besonderes Stufenkonzept statt kontinuierlicher Einstellung, also um einen speziellen Fall der Leuchtweitenregulierung. Dies ermöglicht eine Sichtweitenerhöhung während einer Entprellzeit zur präventiven Blendungsvermeidung, beispielsweise auch bei AHC (AHC - Adaptive High Beam Control), CHC oder ALC (ALC - Adaptive Low Beam Control). Der Abstrahlwinkel eines Scheinwerfers 370 wird in einer Zwischenstufe oder mindestens einer Zwischenstufe angehoben. Dabei kann die Entprellzeit für die verschiedenen Stufen aufgeteilt werden, wie es beispielsweise in Fig. 8A gezeigt ist.

Wenn beispielsweise Fernlicht eingeschaltet werden soll, kann der Scheinwerferwinkel erst rampenförmig auf den maximalen Winkel 877 eingestellt werden, bevor eine Fernlichtverteilung eingestellt wird. Dadurch wirkt die Umschaltung ins Fernlicht weniger hart, was komfortabler für den Fahrer ist. Falls keine gleitende Leuchtweite (AHC - Adaptive High Beam Control) vorgesehen ist, bei der die Hell-Dunkel-Grenze (HDG) zwischen Abblendlicht und Fernlicht quasi stufenlos eingestellt werden kann, kann die Hell-Dunkel-Grenze mit der dynamischen Leuchtweitenregulierung angepasst werden. Dies ist bei reinen Fernlichtassistenten (HBA - High Beam Activation) mit integrierter dynamischer Leuchtweitenregulierung (auch: ALC - Adaptive Low Beam Control) z. B. für Beladungsausgleich nützlich, wie es beispielsweise bei Xenon-Scheinwerfern aufgrund gesetzlicher Vorschriften immer verbaut. Wenn bei einem Ausführungsbeispiel noch kein Fernlicht eingeschaltet wird, kann die Hell-Dunkel-Grenze dennoch angehoben werden, um dadurch die Sichtweite vor Ablauf der Fernlicht-Entprellzeit anzuheben, wobei eine prophylaktische Blendungsvermeidung erhalten bleibt. Statt einer Entprellzeit kann auch eine Entprellstrecke, wobei ein Fahrzeug eine gewisse Strecke fährt, bevor eine andere Abstrahlcharakteristik eingenommen wird, oder eine Kombination von beidem genutzt werden.

Die beschriebenen und in den Figuren gezeigten Ausführungsbeispiele sind nur beispielhaft gewählt. Unterschiedliche Ausführungsbeispiele können, im Rahmen den Ansprüche, vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können, im Rahmen den Ansprüche, erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zur Steuerung einer Lichtaussendung zumindest eines Scheinwerfers (370) eines Fahrzeugs (300), wobei das Verfahren (400) folgende Schritte aufweist:
Empfangen (410) eines Veränderungsfreigabesignals zur Durchführung einer Veränderung der Lichtaussendung des zumindest einen Scheinwerfers (370) von einer Eingangsabstrahlcharakteristik (373, 873) zu einer Ausgangsabstrahlcharakteristik (377, 877) während einer ansprechend auf das Veränderungsfreigabesignal beginnenden Entprellzeit und/oder Entprellstrecke;
Durchführen (1015) eines Vergleichs der Eingangsabstrahlcharakteristik (373, 873) und einer Zwischenabstrahlcharakteristik (375, 875);
Verändern (420) der Lichtaussendung des zumindest einen Scheinwerfers (370) von der Eingangsabstrahlcharakteristik (373, 873) zu der Zwischenabstrahlcharakteristik (375, 875) ansprechend auf das Veränderungsfreigabesignal, wobei der Schritt des Veränderns (420) der Lichtaussendung des zumindest einen Scheinwerfers (370) von der Eingangsabstrahlcharakteristik (373, 873) zu der Zwischenabstrahlcharakteristik (375, 875) abhängig von dem Vergleich durchgeführt wird, wobei der Schritt (420) des Veränderns der Lichtaussendung des zumindest einen Scheinwerfers (370) von der Eingangsabstrahlcharakteristik (373, 873) zu der Zwischenabstrahlcharakteristik (375, 875) durchgeführt wird, wenn die Eingangsabstrahlcharakteristik (373, 873) zu der Zwischenabstrahlcharakteristik (375, 875) in einem ersten Verhältnis steht, und wobei eine Durchführung des Schrittes (420) des Veränderns der Lichtaussendung des zumindest einen Scheinwerfers (370) von der Eingangsabstrahlcharakteristik (373, 873) zu der Zwischenabstrahlcharakteristik (375, 875) übersprungen wird, wenn die Eingangsabstrahlcharakteristik (373, 873) zu der Zwischenabstrahlcharakteristik (375, 875) in einem zweiten Verhältnis steht oder derselben entspricht; und
Verändern (430) der Lichtaussendung des zumindest einen Scheinwerfers (370) von der Zwischenabstrahlcharakteristik (375, 875) oder der Eingangsabstrahlcharakteristik (373, 873) zu der Ausgangsabstrahlcharakteristik (377, 877) bei Ablauf der Entprellzeit und/oder der Entprellstrecke.

2. Verfahren (400) gemäß Anspruch 1, bei dem in zumindest einem der Schritte des Veränderns (420, 430) die Lichtaussendung graduell verändert wird.

3. Verfahren (400) gemäß einem der vorangegangenen Ansprüche, bei dem zumindest einer der Schritte des Veränderns (420, 430) durchgeführt wird, wenn das Veränderungsfreigabesignal einen Wert aufweist, der anzeigt, dass zumindest eine Freigabebedingung zur Veränderung der Lichtaussendung erfüllt ist.

4. Verfahren (400) gemäß einem der vorangegangenen Ansprüche, mit einem Schritt des Bestimmens (915) der Zwischenabstrahlcharakteristik (375, 875) basierend auf Fahrzeugeigenschaften und/oder Fahrtdaten des Fahrzeugs (300), wobei der Schritt des Bestimmens (915) während der Entprellzeit und/oder der Entprellstrecke ausgeführt wird.

5. Verfahren (400) gemäß Anspruch 4, bei dem im Schritt des Bestimmens (915) die Zwischenabstrahlcharakteristik (375, 875) zusätzlich basierend auf einer Information über eine Steigung einer Fahrbahn bestimmt wird, auf der sich das Fahrzeug (300) bewegt.

6. Verfahren (400) gemäß einem der vorangegangenen Ansprüche, mit einem Schritt des Ermittelns eines Zeitpunkts zur Durchführung des Schrittes des Veränderns (420) der Lichtaussendung des zumindest einen Scheinwerfers (370) von der Eingangsabstrahlcharakteristik (373, 873) zu der Zwischenabstrahlcharakteristik (375, 875) ansprechend auf das Veränderungsfreigabesignal.

7. Verfahren (400) gemäß einem der vorangegangenen Ansprüche, mit einem Schritt des Veränderns der Lichtaussendung des zumindest einen Scheinwerfers (370) von der Zwischenabstrahlcharakteristik (375, 875) zu mindestens einer weiteren Zwischenabstrahlcharakteristik (376, 876), wobei im Schritt des Veränderns (430) die Lichtaussendung des zumindest einen Scheinwerfers (370) bei Ablauf der Entprellzeit und/oder der Entprellstrecke von der mindestens einen weiteren Zwischenabstrahlcharakteristik (376, 876) zu der Ausgangsabstrahlcharakteristik (377, 877) verändert wird.

8. Vorrichtung (320), die ausgebildet ist, um die Schritte des Verfahrens (400) gemäß einem der Ansprüche 1 bis 7 durchzuführen.

9. Computerprogrammprodukt mit Programmcode zur Durchführung des Verfahrens (400) nach einem der Ansprüche 1 bis 7, wenn das Programm auf einer Vorrichtung (320) ausgeführt wird.

## Claims

1. Method (400) for controlling a light emission of at least one headlight (370) of a vehicle (300), wherein the method (400) has the following steps:
receiving (410) a change enable signal for performing a change in the light emission of the at least one headlight (370) from an input radiation pattern (373, 873) to an output radiation pattern (377, 877) during a debounce time and/or debounce distance, starting as a reaction to the change enable signal;
performing (1015) a comparison of the input radiation pattern (373, 873) and an intermediate radiation pattern (375, 875);
changing (420) the light emission of the at least one headlight (370) from the input radiation pattern (373, 873) to the intermediate radiation pattern (375, 875) as a reaction to the change enable signal, wherein the step of changing (420) the light emission of the at least one headlight (370) from the input radiation pattern (373, 873) to the intermediate radiation pattern (375, 875) is performed in dependence on the comparison, wherein the step (420) of changing the light emission of the at least one headlight (370) from the input radiation pattern (373, 873) to the intermediate radiation pattern (375, 875) is performed if the input radiation pattern (373, 873) has a first relationship with respect to the intermediate radiation pattern (375, 875), and wherein a performance of the step (420) of changing the light emission of the at least one headlight (370) from the input radiation pattern (373, 873) to the intermediate radiation pattern (375, 875) is skipped if the input radiation pattern (373, 873) has a second relationship with respect to the intermediate radiation pattern (375, 875) or corresponds thereto; and
changing (430) the light emission of the at least one headlight (370) from the intermediate radiation pattern (375, 875) or the input radiation pattern (373, 873) to the output radiation pattern (377, 877) upon the completion of the debounce time and/or the debounce distance.

2. Method (400) according to Claim 1, wherein in at least one of the changing steps (420, 430) the light emission is changed gradually.

3. Method (400) according to either of the preceding claims, wherein at least one of the changing steps (420, 430) is performed if the change enable signal has a value that indicates that at least one enable condition for changing the light emission has been satisfied.

4. Method (400) according to one of the preceding claims, having a step of determining (915) the intermediate radiation pattern (375, 875) based on vehicle properties and/or driving data of the vehicle (300), wherein the determining step (915) is performed during the debounce time and/or the debounce distance.

5. Method (400) according to Claim 4, wherein in the determining step (915) the intermediate radiation pattern (375, 875) is additionally determined based on information relating to a slope of a road on which the vehicle (300) is traveling.

6. Method (400) according to one of the preceding claims, having a step of ascertaining a time point for performing the step of changing (420) the light emission of the at least one headlight (370) from the input radiation pattern (373, 873) to the intermediate radiation pattern (375, 875) as a reaction to the change enable signal.

7. Method (400) according to one of the preceding claims, having a step of changing the light emission of the at least one headlight (370) from the intermediate radiation pattern (375, 875) to at least one further intermediate radiation pattern (376, 876), wherein in the changing step (430) the light emission of the at least one headlight (370) is changed from the at least one further intermediate radiation pattern (376, 876) to the output radiation pattern (377, 877) upon completion of the debounce time and/or the debounce distance.

8. Apparatus (320), configured for performing the steps of the method (400) according to one of Claims 1 to 7.

9. Computer program product with program code for performing the method (400) according to one of Claims 1 to 7 when the program is executed on an apparatus (320).

## Revendications

1. Procédé (400) de commande d'une émission lumineuse d'au moins un phare (370) d'un véhicule (300), le procédé (400) comprenant les étapes suivantes :
la réception (410) d'un signal de validation de modification pour l'exécution d'une modification de l'émission lumineuse dudit au moins un phare (370) d'une caractéristique de rayonnement d'entrée (373, 873) à une caractéristique de rayonnement de sortie (377, 877) au cours d'une durée de stabilisation et/ou d'un trajet de stabilisation commençant en réponse au signal de validation de modification ;
l'exécution (1015) d'une comparaison de la caractéristique de rayonnement d'entrée (373, 873) à une caractéristique de rayonnement intermédiaire (375, 875) ;
la modification (420) de l'émission lumineuse dudit au moins un phare (370) de la caractéristique de rayonnement d'entrée (373, 873) à la caractéristique de rayonnement intermédiaire (375, 875) en réponse au signal de validation de modification, dans lequel l'étape de modification (420) de l'émission lumineuse d'au moins un phare (370) de la caractéristique de rayonnement d'entrée (373, 873) à la caractéristique de rayonnement intermédiaire (375, 875) est exécutée en fonction de la comparaison,
dans lequel l'étape (420) de modification de l'émission lumineuse d'au moins un phare (370) de la caractéristique de rayonnement d'entrée (373, 873) à la caractéristique de rayonnement intermédiaire (375, 875) est exécutée lorsque la caractéristique de rayonnement d'entrée (373, 873) présente un premier rapport par rapport à la caractéristique de rayonnement intermédiaire (375, 875), et dans lequel une exécution de l'étape (420) de modification de l'émission lumineuse de l'au moins un phare (370) de la caractéristique de rayonnement d'entrée (373, 873) à la caractéristique de rayonnement intermédiaire (375, 875) est sautée lorsque la caractéristique de rayonnement d'entrée (373, 873) présente un second rapport par rapport à la caractéristique de rayonnement intermédiaire (375, 875) ou correspond à celle-ci ; et
la modification (430) de l'émission lumineuse de l'au moins un phare (370) de la caractéristique de rayonnement intermédiaire (375, 875) ou de la caractéristique de rayonnement d'entrée (373, 873) à la caractéristique de rayonnement de sortie (377, 877) lorsque le temps de stabilisation et/ou le trajet de stabilisation s'est écoulé.

2. Procédé (400) selon la revendication 1, dans lequel, lors d'au moins l'une des étapes de modification (420, 430), l'émission lumineuse est modifiée progressivement.

3. Procédé (400) selon l'une des revendications précédentes, dans lequel au moins l'une des étapes de modification (420, 430) est exécutée lorsque le signal de validation de modification présente une valeur indiquant qu'au moins une condition de validation est remplie pour la modification de l'émission lumineuse.

4. Procédé (400) selon l'une des revendications précédentes, comprenant une étape de détermination (915) de la caractéristique de rayonnement intermédiaire (375, 875) sur la base de propriétés du véhicule et/ou de données de déplacement du véhicule (300), dans lequel l'étape de détermination (915) est exécutée au cours du temps de stabilisation et/ou du trajet de stabilisation.

5. Procédé (400) selon la revendication 4, dans lequel, lors de l'étape de détermination (915), la caractéristique de rayonnement intermédiaire (375, 875) est en outre déterminée sur la base d'une information concernant une pente d'une chaussée sur laquelle le véhicule (300) se déplace.

6. Procédé (400) selon l'une des revendications précédentes, comprenant une étape de détermination d'un instant d'exécution de l'étape de modification (420) de l'émission lumineuse dudit au moins un phare (370) de la caractéristique de rayonnement d'entrée (373, 873) à la caractéristique de rayonnement intermédiaire (375, 875) en réponse au signal de validation de modification.

7. Procédé (400) selon l'une des revendications précédentes, comprenant une étape de modification de l'émission lumineuse dudit au moins un phare (370) de la caractéristique de rayonnement intermédiaire (375, 875) à au moins une autre caractéristique de rayonnement intermédiaire (376, 876), dans lequel, lors de l'étape de modification (430), l'émission lumineuse dudit au moins un phare (370) est modifiée de ladite au moins une autre caractéristique de rayonnement intermédiaire (376, 876) à la caractéristique de rayonnement de sortie (377, 877) lorsque le temps de stabilisation et/ou le trajet de stabilisation s'est écoulé.

8. Dispositif (320) conçu pour exécuter les étapes du procédé (400) selon l'une des revendications 1 à 7.

9. Produit de programme d'ordinateur comportant un code de programme permettant de mettre en œuvre le procédé (400) selon l'une des revendications 1 à 7 lorsque le programme est exécuté sur un dispositif (320).
